# EUROPEAN PATENT APPLICATION

(11) **EP 4 520 782 A1**
(43) Date of publication of application: **12.03.2025**
(21) Application number: 24198367.5
(22) Date of filing: 04.09.2024
(51) Int. Cl.: C08K 3/22, H01M 50/122

(54) **THERMALLY STABLE, FIRE RESISTANT THERMOSET POLYMER COMPOSITION FOR HEAT/FIRE PROPAGATION APPLICATIONS**

(30) Priority: 05.09.2023 US 202318460776
(71) Applicant: TE Connectivity Solutions GmbH, 8200 Schaffhausen (CH)
(72) Inventor: Tao, Dejie, Fremont, CA 94555 (US); Wang, Lei, Fremont, CA 94555 (US); Wu, Yiliang, Fremont, CA 94555 (US); Gao, Ting, Fremont, CA 94555 (US)
(74) Representative: Ashton, Gareth Mark

(57) **Abstract**

A thermally stable, flame resistant thermoset polymer composition for heat/fire applications is disclosed. The thermoset polymer composition comprises a thermoset polymer and at least one ceramifiable filler. The thermoset polymer composition can include additional additives. This thermoset polymer composition can be easily processed, is thermally stable and maintains its mechanical and insulation properties.

## Description

### FIELD OF THE INVENTION

The present invention relates to a thermoset polymer composition used in heat/fire propagation applications. In particular, the invention is directed to a thermoset polymer composition comprising a thermoset polymer and at least one ceramifiable filler. The thermoset polymer composition can include additional additives, as desired. The resulting polymer composition is thermally stable, fire resistant and maintains its insulation capability after being exposed to heat or flame.

### BACKGROUND OF THE INVENTION

There are many applications that require the underlying materials to withstand high heat as well as to avoid fire propagation. This is especially true in objects with electronics where thermal runaway may result. Thermal runaway is a process that is accelerated by increased temperature which in turn releases energy and further increases the temperature. Thermal runaway can be associated with exothermic reactions or increased power flow and power dissipation. This is a risk particularly found when lithium batteries are used in components. Thermal runaway results in ejection of gases, higher temperature, flames as well as smoke.

Ceramic materials can be used to prevent thermal runaway. However, ceramic materials are not flexible, low cost or easy to manufacture. Therefore, there is a need for a thermally stable, fire resistant material which can be manufactured easily that avoids these issues. Preferably, the material is a polymeric material with at least one ceramifiable filler.

U.S. Patent No. 5,707,734 describes a polymer composite having enhanced flame retardant behavior. The composite includes a polymer and glass fibers coated with a fumed silica. The polymer can be selected from a wide variety of polymers, including polybutylene, polyethylene terephthalates, polycarbonates, polyethylenes, polypropylenes, nylons and mixtures of these polymers.

In the article, Flame Retardant Mechanism of Silica Gel/Silica, (Fire and Materials, Vol. 24, No. 6, 277-289, November/December 2000) Kashiwagi et. al. studied various types of silica, silica gel, fumed silicas and fused silicas in polypropylene and polyethylene oxide to determine their flame retardant effectiveness and mechanisms. Fumed silicas and silica gel used in the study accumulated near the surface of the polymer when subject to flame acts as a thermal insulation layer and a barrier to the transport of degradative products to the surface.

US Patent No. 6,774,159B2 describes a composition possessing high resistance to fire propagation. The composition comprises a base polymer and a fireproofing additive containing a metal hydroxide. The composition avoids problems with metal hydroxides, namely high viscosity and reduced mechanical characteristics.

US Patent Publication No. US2009/0326108A1 describes a halogen-free flame retardant thermoplastic polyurethane composition. The flame retardant thermoplastic polyurethane composite resin composition is capable of improving flame retardancy and flaming-drip of the thermoplastic polyurethane resin through the desirable formation of char during combustion. The halogen-free flame retardant used was a phosphinate, a diphosphinate, dipenttaerythritol, talc, or a melamine derivative.

In the article, "Influence of Fumed Silica on Flame-Retardant Properties of Ethylene Vinyl Acetate/Aluminum Hydroxide Composites", published in 2010 in the Journal of Applied Polymer Science (https://dpo.org/10.1002/app.33126), the authors describe the flammability and synergistic flame-retardant effects of fumed silica. The results according to the authors show that the addition of fumed silica improves the UL 94 rating of the composite. In addition, the cone calorimeter testing showed that the addition of fumed silica greatly reduced the heat release rate from the composite when exposed to flames.

In a 2012 article "Thermal Stability of High Density Polyethylene Fumed Silica Nanocomposites", published in August 2012, in the Journal of Thermal Analysis and Calorimetry, Vol. 109, Issue 2, Dorigato et al. describe how high-density polyethylene based nanocomposites were prepared through melt compounding by using surface functionalized fumed silica nanoparticles. These materials were investigated to determine their capability to improve mechanical properties and resistance to thermal degradation. Thermogravimetric analysis showed that the selected nanoparticles were effective in increasing the decomposition temperature and decreasing the mass loss rate. The formation of a char enriched layer was responsible for limiting the diffusion of oxygen through the samples. Cone calorimeter tests revealed the efficacy of functionalized nanoparticles in delaying the time to ignition and decreasing the heat release rate values. The data showed that functional fumed silica nanoparticles could provide an effective way to enhance the flammability properties of polyolefins.

US Patent Publication No. US2015/0152222A1 describes a flame retardant thermoplastic polyurethane composition comprising a non-halogen flame retardant. The thermoplastic polyurethane compositions are useful for applications where high flame performance and low smoke properties as well as high tensile strength are desirable such as wire and cable applications, film applications and molding applications.

US Patent Publication No. US 2015/0170789A1 describes a fire resistant composition. The fire resistant composition includes at least one polymer and at least one ceramifying material. The composition includes no materials that produce significant ionic conductivity on melting below a threshold temperature and include substantially no magnesium hydroxide, Mg(OH)₂.

In a 2019 article, "Synergistic Effects of Metal Hydroxides and Fumed Nanosilica as Fire Retardants for Polyethylene", published in Flame Retardancy and Thermal Stability of Materials, 2:30-48, Fredi et al. describe the effects of aluminum/magnesium hydroxide microfillers and organomodified fumed silica nanoparticles for liner low-density polyethylene. The authors have found the rise in viscosity contributes to the synergistic affect between the metal hydroxides and nanosilica. The authors conclude that metal hydroxides and fumed nanosilica enhances the mechanical properties and fire performance of the polyethylene.

US Patent No. 10,854,356B2 describes a fire resistant cable with a ceramifiable layer. The applicant describes a composition based upon a mixture of specific thermoplastic ethylene polymers, silica as a filler and hydrated magnesium silicate at the stabilizing agent. The composition can be used for manufacturing a cable which has suitable mechanical performance in operation and is effective for maintaining the cable in operating condition in the presence of fire and mechanical stress.

In "Enhancing Thermo-Mechanical Properties of Epoxy Composites using Fumed Silica with Different Surface Treatments" published in Polymers, 13, 2691 in 2021, Kim et al. discuss their study to improve the thermal and mechanical properties of epoxy/fumed silica composite. Kim et al. conclude, based on their data, that the addition of silicon nanoparticles, the thermal stability of the composite is improved and when subject to pyrolysis, the pyrolysis process is slowed down.

Even with all these advances, there exists a need for thermoset polymer material with improved fire propagation resistance, thermal stability and insulating property, which can be easily processed while still preserving the underlying mechanical properties of the thermoset polymer.

### SUMMARY OF THE INVENTION

An embodiment is directed to thermally stable, fire resistant thermoset polymer composition comprising a thermoset polymer and at least one ceramifiable filler.

An embodiment is directed to the process of forming a thermally stable, fire resistant thermoset polymer comprising a thermoset polymer and at least one ceramifiable filler.

Another embodiment is directed to the use of a thermally stable, fire resistant thermoset polymer composition comprising a thermoset polymer and at least one ceramifiable filler in objects which may be subject to overheating or exposure to fire.

Yet another embodiment is directed to a battery enclosure made from a thermally stable, fire resistant thermoset polymer comprising a polymer and at least one ceramifiable filler.

Other features and advantages of the present invention will be apparent from the following more detailed description of the preferred embodiments, which illustrate, by way of example, the principles of the invention.

### DETAILED DESCRIPTION OF THE INVENTION

In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The thermally stable, fire resistant composition comprises a thermoset polymer and at least one ceramifiable filler and optionally other additives.

Examples of thermoset polymers which can be used in the thermally stable fire resistant thermoset polymer composition include but are not limited to: silicones, epoxies, acrylates, vinyl esters, phenolics, cyanoacrylates, melamines, urea-formaldehyde and reactive polyurethanes and mixtures thereof. The thermoset polymer may be formed from the desired solvent, binder and viscosity modifier as needed to obtain the thermoset polymer with desired properties.

The thermally stable fire resistant thermoset polymer composition includes at least one ceramifiable filler and optionally other desired additives. Examples of other suitable additives include, electrically conductive fillers, reinforcing fillers, phosphorus based flame retardants, synergists, as well as other conventional additives used in the processing of polymers.

The thermally stable fire resistant thermoset polymer composition includes at least one ceramifiable filler. The ceramifiable filler can include any type of filler which can react with the other fillers when exposed to fire or a high temperature (greater than or equal to 500° C) to form inorganic residue and ceramic layer. Examples of ceramifiable fillers include but are not limited to magnesium carbonate, sodium bicarbonate, and potassium bicarbonate. In one embodiment, the ceramifiable filler can be a flame retardant. The flame retardants are preferably halogen free, environmentally safe, and non-toxic. These ceramifiable fillers substantially reduce the amount of smoke released by the underlying polymer and reduce the damage that is suffered by such polymer when exposed to fire. The ceramifiable filler can include at least one silica based flame retardant. An example of a silica based flame retardant is fumed silica. Aerosil^{RTM} fumed silica from Evonik is an example of a commercially available fumed silica. Other flame retardants that can be used as ceramifiable fillers include metal oxides and metal hydroxides such as magnesium hydroxide, aluminum hydroxide and calcium dihydroxide and magnesium oxide. In one embodiment, preferably, the ceramifiable filler is a combination of fumed silica, magnesium hydroxide, aluminum hydroxide, and calcium dihydroxide. In one embodiment, the magnesium hydroxide can be in the range of about 20 to 98 weight %, the aluminum hydroxide in the range of about 0 to about 40 weight %, the calcium dihydroxide in the range of about 0 to about 40 weight % and the fumed silica in the range of about 2 to about 30 weight %, based on the total weight of the ceramifiable filler. In yet another embodiment, the ceramifiable filler can comprise aluminum polyphosphate with fumed silica.

Reinforcing fillers can be used in the thermally stable, fire resistant thermoset polymer composition. Examples of reinforcing fillers include: carbon fibers, glass fibers, ceramic fibers, whiskers, polymer fibers, nano fibers or nano hollow fibers, as well as blends thereof. These reinforcing fillers help improve the strength and dimensional stability of the thermally stable, fire resistant thermoset polymer composition when it is subject to a flame.

Carbon fibers which can be used in the instant invention include but are not limited to: carbon nanotubes, and carbon fiber. Generally, these carbon fibers improve the heat resistance of the polymer composition and may be burned off after the composition is subject to fire. Any known carbon fiber can be used in the instant invention. Typically, the carbon fiber has a nominal diameter of about 1 to about 50 microns, preferably from about 5 to about 20 microns. The amount of carbon fiber which can be used in the thermally stable, fire resistant thermoset polymer composition is in the range about 0 to about 50 volume percent of the total thermoset polymer composition.

Glass fibers which can also be added to the thermally stable fire resistant thermoset polymer composition as a reinforcing filler. Examples of such glass fibers include but are not limited to chopped glass fibers, continuous glass fibers, milled glass, glass balls as well as glass beads. Any known glass fiber can be used in the instant invention. Typically, the glass fiber has a nominal diameter of about 1 to about 50 microns, preferably from about 5 to about 20 microns. The amount of glass fiber used in the thermally stable, fire resistant polymer composition is in the range about 0 to about 50 volume percent of the total thermoset polymer composition.

Similarly, ceramic fibers can also be added to the thermally stable fire resistant thermoset polymer composition. Ceramic fibers can be oxide based ceramic fibers or non-oxide based ceramic fibers or blends thereof. Examples of oxide based ceramic fibers include but are not limited to Al₂O₃, SiO₂, Al₂O₃- SiO₂ or ZrO₂. Examples of non-oxide based ceramic fibers include but are not limited to SiC, BN, or Si₃N₄. The amount of ceramic fiber that can be used in the thermally stable fire resistant thermoset polymer composition ranges from about 0 to about 50 volume percent.

In addition, the thermally stable fire resistant thermoset polymer composition may include polymer fibers as reinforcing fillers. Examples of suitable polymer fibers include aramid fibers and continuous polyethylene fibers. Any known polymer fiber can be used in the instant invention. Typically, the polymer fiber has a nominal diameter of about 1 to about 50 microns, preferably from about 5 to about 20 microns. The polymer fiber used in the thermally stable, fire resistant polymer composition in the range about 0 to about 50 volume percent.

The thermally stable fire resistant thermoset polymer composition can also include nano fibers or nano hollow fibers as reinforcing fillers. Examples of such fibers include but are not limited to carbon nano-tube, graphene, graphene nanoplatelets and Dragonite^{RTM} halloysite (aluminosilicate clay) (available from Applied Minerals, Inc.). The nanotube has a diameter in the range of about 0.1 to about 100 nanometers, preferably from about 0.4 to about 40 nanometers.

In addition, a bromine or phosphorus based flame retardant package may be added to the thermally stable, flame resistant polymer composition as a synergist. The addition of the synergist helps boost char formation and maintain the integrity of the thermally stable fire resistant polymer composition when subject to flames or high temperature.

Other conventional additives may be added to the thermally stable fire resistant thermoset polymer composition. Examples of convention additives include pigments, dyes, voiding agents, antistatic agents, foaming agents, plasticizers, radical scavengers, anti-blocking agents, anti-dust agents, antifouling agents, surface active agents, slip aids, optical brighteners, plasticizers, viscosity modifiers, gloss improvers, dispersion stabilizers, UV stabilizers, UV absorbers, antioxidants, lubricity agents, heat stabilizers, hydrolysis stabilizers, cross-linking activators, coupling agents, layered silicates, radio opacifiers, such as barium sulfate, tungsten metal, non-oxide bismuth salts, fillers, colorants, reinforcing agents, adhesion promoters (such as for example, but not limited to, 2-hydroxyethyl-methacrylate- phosphate), impact strength modifiers, and any combination thereof. Such additives may be included in conventional amounts.

Furthermore, the thermoset polymer used in the thermally stable fire resistant thermoset polymer composition can be crosslinked or cured. One way to crosslink a thermoset polymer composition is using heat or moisture. Another way to crosslink the thermoset polymer composition is to crosslink at room temperature. Additionally, it may be possible to crosslink the thermoset polymer composition using radiation. Radiation crosslinking occurs when the thermoset polymer composition is exposed to an agent such as UV light, electron beam or gamma radiation. If radiation is used as the crosslinking agent, the product us exposed to radiation in the range of 50 kGy to 1100 kGy. Alternatively, the thermoset polymer composition can be subject to dual crosslinking. Examples of dual crosslinking include but are not limited to ultraviolet radiation and thermal crosslinking as well as ultraviolet and moisture crosslinking. The type of crosslinking used as well as the crosslinking conditions are dependent upon the thermoset polymer used in the composition.

In another aspect, the invention relates to the preparation of the thermally stable, fire retardant thermoset polymer composition. The process comprises providing a thermoset polymer and a ceramifiable filler as well as providing any desired additional additives. The thermoset polymer, the ceramifiable filler, and any other additional additives are mixed together using any conventional process to mix materials together. The mixing equipment can be any suitable equipment used in the art of mixing concentrated solids. For example, the thermoset polymer and the additives can be mixed using mixing devices for thermoset polymers such as dual asymmetric centrifugal mixers, e.g. a FlackTek^{RTM} SpeedMixer bladeless mixer, Ross mixers, kneader mixers, two roll mixers, three roll mills, or any other device which can compound the additives into the thermoset polymer.

Once the thermoset polymer is mixed with the desired additives, it can be further processed. For example, the thermally stable fire resistant thermoset polymer composition can be injection molded using processes such as reaction injection molding (RIM) or resin transfer molding (RTM). Alternatively, the thermoset polymer can be compression molded.

The thermally stable fire retardant thermoset polymer can be used in a multilayer system. Furthermore, the thermally stable fire resistant polymer composition can include additional support layers. Examples of possible support layers include but are not limited to metallic support layers such as aluminum foils, plates and nonmetallic support layers such as polymer films, and plates.

The thermally stable, fire resistant thermoset polymer of the instant invention can be used for 3D printing. Any 3D printing method can be used, including but not limited to laser sintering, selective laser sintering, fused deposition modeling, fused filament fabrication and digital light processing.

There are many uses for the thermally stable, fire resistant thermoset polymer composition of the instant invention. For example, the thermoset polymer composition can be made into connectors, wires, cables, printed wire boards, or EMI shields as well as other computer components. The thermoset polymer composition can be used to make electronic components which meet UL 94V standards, such smart phones, electric motors, electric powertrains (e-powertrains), batteries and battery enclosures, chargers for electric vehicles and other components of electric vehicles. The thermoset polymer composition can be used in construction industry in any object in which there is a possibility of a hazard of fire initiated by overheating or short circuits of electrical devices used within the object. In addition, the thermally stable, fire resistant thermoset polymer composition of the instant invention can be used to form any type of housing or enclosure which needs to be fire resistant.

It is believed that when the thermally stable, fire resistant thermoset polymer composition with a ceramifiable filler and optional additives is subject to fire or a high temperature (greater than or equal to 500°C), energy is released due to thermal decomposition. When the polymer composition is degraded by the flame or high temperature, it forms an inorganic residue, as well as charring that serves to provide good cohesion between the polymer composition and the inorganic residue. Also formed is a ceramic layer on the surface of the inorganic residue, which provides reinforcement to the residue. It is believed that this structure resulting after the thermoset polymer composition is degraded by the flame or high temperature, prevents fire prevention by hindering transfer of heat and isolates contact between the thermoset polymer and oxygen and thereby plays a role in flame retardation and fire resistance. The structure helps the underlying thermoset polymer composition maintain good thermal stability and holds its insulation property. The insulation property can be electrically insulating (i.e. above 10⁶ ohm.cm volume resistivity, preferably above 10⁹ ohm.cm volume resistivity) or thermally insulating. In addition to the insulation properties, the thermally stable fire resistant thermoset polymer composition retains its mechanical properties after being processed and being exposed to a high temperature or flame. The ceramic portion of the structure reinforces the shape of the object made from the thermoset polymer composition. In addition, it is believed that the structure absorbs soot particles leading to lower smoke levels.

### Examples

In the following examples set forth below, unless stated otherwise, a ceramifiable filler package comprising the following was used: 65 % by weight of magnesium hydroxide,13 % by weight of calcium dihydroxide, 9 % by weight of aluminum hydroxide and 13 % by weight of fumed silica, all weights being by the total ceramifiable filler package. This ceramifiable filler was used in various polymer compositions and subject to fire resistant testing. For the fire resistant testing, a thermally stable fire resistant polymer composition was prepared into a 1 millimeter thick sample. The sample was sandwiched between two metal plates, clamped and subject to an open flame on its bottom surface, having a temperature in the range of about 1050° to about 1100° C.

The ceramifiable filler package described above was added to a rigid epoxy and a flexible epoxy. A flexible epoxy is one that has a Shore A hardness of less than 60 and an elongation above 8%. The ceramifiable filler package comprised 50% by weight of the polymer composition. The rigid epoxy was EpoxiCure 2 resin system from Buehler, a division of Illinois Tool Works, Inc. The flexible epoxy can be a flexible epoxy such as Duralco 4538 resin from Cotronics Corp. The composition was made into 1 millimeter plaques and fire tested at 1100° C. The rigid epoxy failed and cracked, while the flexible epoxy was self-supporting and did not crack.

In another example, the ceramifiable filler package was added to epoxy. A 1 millimeter plaque was made of the sample and subjected to an 800° C furnace for 5 minutes. The sample formed a dense ceramic layer, was self-supporting and maintained its shape.

One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A thermally stable, insulating fire resistant thermoset polymer composition comprising a thermoset polymer and at least one additive, the at least one additive comprising a ceramifiable filler, wherein the thermoset polymer composition is ceramified after being exposed to a high temperature or a flame and maintains its insulation properties.

2. The composition of claim 1, wherein said thermoset polymer is a flexible epoxy.

3. The composition of claim 1 or 2, wherein the ceramifiable filler comprises a fumed silica and a metal hydroxide, preferably wherein the ceramifiable filler comprises fumed silica, magnesium hydroxide, calcium hydroxide, and aluminum hydroxide.

4. The composition of any preceding claim, wherein said thermally stable fire resistant polymer composition includes reinforcing fillers, preferably wherein said reinforcing fillers are chosen from glass fibers, ceramic fibers, whiskers, polymer fibers, nano or nano hollow fibers and blends thereof.

5. The composition of any preceding claim, wherein said composition maintains its mechanical properties after being exposed to a high temperature or flame.

6. A process for forming a thermally stable, fire resistant thermoset polymer composition comprising mixing a thermoset polymer with at least one additive, the at least one additive including a ceramifiable filler and exposing such thermoset polymer composition to a high temperature or flame to form a ceramifiable layer.

7. The process of claim 6, wherein said ceramifiable filler comprises fumed silica and a metal hydroxide, preferably wherein said ceramifiable filler comprises fumed silica, magnesium hydroxide, calcium hydroxide and aluminum hydroxide.

8. The process of claim 6 or 7, wherein said thermoset polymer is a flexible epoxy.

9. An object made from a thermally stable fire resistant thermoset polymer comprising a thermoset polymer with a ceramifiable filler, wherein said object may be subject to high temperatures or flames.

10. The object of claim 9, wherein said thermoset polymer is a flexible epoxy, preferably wherein said flexible epoxy has a Shore A hardness of less than 60 and an elongation above 8%.

11. The object of claim 9 or 10, wherein said ceramifiable filler comprises fumed silica and a metal hydroxide, preferably wherein said ceramifiable filler comprises fumed silica, magnesium hydroxide, calcium hydroxide, and aluminum hydroxide.

12. A battery enclosure made from a thermally stable fire resistant thermoset polymer comprising a thermoset polymer with a ceramifiable filler.

13. The battery enclosure of claim 12, wherein said thermoset polymer is a flexible epoxy.

14. The battery enclosure of claim 12 or 13, wherein said ceramifiable filler comprises fumed silica and a metal hydroxide.

15. The battery enclosure of claim 12, 13 or 14 wherein said ceramifiable filler comprises fumed silica, magnesium hydroxide, calcium hydroxide, and aluminum hydroxide.
